# EUROPEAN PATENT APPLICATION

(11) **EP 3 064 071 A1**
(43) Date of publication of application: **07.09.2016**
(21) Application number: 16000520.3
(22) Date of filing: 04.03.2016
(51) Int. Cl.: A23L 3/54, A23B 7/02, A23L 19/00

(54) **DRIED SMOOTHIE CHIP**

(30) Priority: 06.03.2015 EE 201500015
(71) Applicant: Vivaberg OÜ, 90502 Haapsalu (EE)
(72) Inventor: Niils, Riho, 90502 Haapsalu (EE)
(74) Representative: Koitel, Raivo

(57) **Abstract**

Dried airy chip manufactured form pureed frozen berries and/or fruits, sugar, has a reduced sugar content and further comprises a sweetener and an agent binding water emitted from the berries or fruits.

## Description

### Technical field

This invention belongs to the field of food, and its processing thereof, and, more particularly, the invention relates to low-calorie snacks (chips) made of dried berries and/or fruits.

### Prior art

Fruit chips and their method of preparation are well known (KR20130057910, Kim Hyun Su, published on 03.06.2013), which deals with pear fruit chips. Their preparation comprises the following steps: sections of a constant thickness are cut, the sections of the pear are dipped into fruit juice, and then they are dried, dipping and drying are repeated many times until the defined moisture of the sections is achieved, whereas there may be more than one fruit juice.

Also, the invention (JPS56109546, House Food Industrial Co., published on 31.08.1981) is known for the manufacture of dried fruit chips. Fruits, such as apples, peaches, persimmons, etc., are cut and immersed in syrup, which contains 6-25% water-soluble sugar, the sections are dried to the water content 15-60%. Frozen chips are heated under pressure to about 30 mm Hg and at 30 °C under microwave irradiation to the aqueous solution is 10-40%. Finally, the drying takes place in a vacuum of 10-30 mm Hg at a temperature below 50 °C, to obtain the final product, which contains 5% water.

The disadvantage of these solutions is the high moisture content of chips and long and repeated drying process.

In terms of the technical nature, the closest solution to the above is berry chips and their preparation (http://www.taarapollu.ee). In this solution, berry chips contain pureed frozen berries, berry flour, organic sugar, modified starch, emulsifier. Berry chips are prepared as follows: frozen berries are crushed, the crushed berry mass with the ingredients is placed in the mixer for frothing (pureeing). The frothed raw mass is dosed in small portions on the drying plate, they are dried in hot air at 50-80 °C for 8-12 hours; the finished products are packaged. A disadvantage of this solution is a very long-term process of drying, a large sugar content (19.5 to 24.5 percentage by weight), and the fact that the product loses its consumption attractiveness within about 10 to 30 minutes when exposed to the air (becomes sticky, soggy). In other words, the shelf life of the original characteristics of the product of this solution, when exposed to air (in the case of an open package), is insufficiently short.

### Summary of the invention

The aim of the present invention is to develop a composition of low-calorie berry or fruit chips.

The presented dried airy chips contain frozen berries or fruits, sugar, sweetener, the agent binding the water emitted from berries, a mixture of an emulsifier and stabilizers, an anti-caking agent and optionally an acidity regulator.

The preparation method of airy chip comprises the following steps: the frozen berries/fruits and the sugar and sweetener are crushed into a puree, the agent binding water emitted from the berries and an anti-caking agent are added to the puree and then the mixture is allowed to stand. Water is added to the mixture of the emulsifier and the stabilizers, and the mixture is heated to compaction, the mixture is cooled and added to the puree mixture. The puree mixture is frothed, as a result of which, the puree mix becomes airy, then the frothed and airy mixture is dosed as portions on a drying plate/drying belt and dried at a temperature within the range of 80-130 °C. The drying process occurs in a significantly shorter period compared to the solutions as shown in the prior art. The dried chips are cooled down at room temperature for 5 min and packaged in a dry environment.

### Embodiments of the invention

The aim of the invention was to manufacture low-calorie snacks of dried berries and/fruit, to achieve a drying time for the chips as short as possible, without damaging the sensory properties characteristic of the chips and to extend the shelf-life of the chips at 21 °C and at 55% humidity (or at the regular room temperature in an open package).

To meet these objectives, two basic recipes were developed as preferred embodiments, using berries as the basic components as the agent binding water emitted from berries in the recipe #1 dehydrated rice flakes (DRF) and in the recipe #2 Psyllium to ensure the shorter drying time of the chips and to extend their preservation (to reduce the softening of the product during the shelf-life period, the mutual sticking of the product in the package and to extend the shelf life of the product in contact with the ambient humidity and temperature (room temperature) in an open package).

### Recipe #1

Frozen berries, sugar, sweetener (Stevia), the agent binding water emitted from berries (dehydrated rice flakes (DRF)), emulsifier (Palsgaard® Mouldlce 169 (P5969) from the company Palsgaard A/S, Denmark), anti-caking agent (amorphous silicon dioxide (SiO₂)).

The composition of the recipe #1 chips in percentage by weight comprises: pureed frozen berries from 54.7 to 89;
sugar from 10.8 to 19.0;
a sweetening agent from 0.021 to 0.04;
an anti-caking agent from 0.5 to 1.1;
a mixture of an emulsifier and stabilizers from 1 to 2.1;
an agent binding water emitted from the berries from 2.1 to 4.1.

### Recipe #2

Frozen berries (such as blueberry, cranberry, raspberry, strawberry), sugar, sweetener (Stevia), agent binding water emitted from the berries (psyllium (fiber husk)), emulsifier (Palsgaard® Mouldlce 169 (p5969) from the company Palsgaard A/S, Denmark), anti-caking agent (microcrystalline cellulose), citric acid.

The composition of the recipe #2 chips in percentage by weight comprises:
pureed frozen berries from 51.4 to 85;
sugar from 12.3 to 19.0;
a sweetening agent from 0.015 to 0.06;
an anti-caking agent from 1 to 3;
a mixture of an emulsifier and stabilizers from 1.5 to 3;
an agent is binding water emitted from the berries from 2 to 5.8.
an acidity regulator (citric acid) from 0.2 to 1.

During the manufacture of the chips the production facilities must have a temperature of not more than 21 °C, and there may not be temperature fluctuations (due to the formation of condensation). For the manufacture of the chips, berries frozen at -20 °C are used. Frozen berries, sugar, and the sweetener Stevia are pureed within about 1 minute, using a blender (particle size should not exceed 1 mm). DRF powder and the SiO2 powder (recipe #1) and psyllium powder and the microcrystalline cellulose (recipe #2) are added to the puree, stirred and allowed to stand for approximately 5 min. Water is added to the mixture of the emulsifier and the stabilizers, and the mixture is heated until thickened (approximately 70 °C). The mixture of the emulsifier and the stabilizers is cooled and added to the pureed berry mixture. The mixture is frothed and as a result, it will become airy, keeping the temperature at 5 °C for about 15 min. The frothed/aired mixture is transferred to the squirt bag with a nozzle size of 1.5 cm. On the drying plate/drying belt portions are dosed by approximately 2.5 g. The dosing time must not exceed 10 minutes. The diameter of the chips is 2.5 cm and the height of about 2 cm (when dried, 0.8-1.0 cm). Drying is carried out in one embodiment, in convection mode (in a convection oven, from which the humidity is forced out in an automated manner) at 100 °C and at the humidity of 0% at 1 h (in case of recipe #1), and 1 h 10 min (strawberry, raspberry, blueberry), and 1 h 20 min (cranberries) in the case of recipe #2. Products are cooled at room temperature for approximately 5 min and packaged in a dry environment. The moisture content of the finished products is 1.0-1.7%.

Drying time can be significantly shorter than what is stipulated in the recipe (up to the average time span of 10-20 min) using other known devices and methods for drying (e.g., nutraREV technology introduced by EnWave Corporation that uses a combination of vacuum pressure and microwave energy).

In the chips are used dehydrated rice flakes (DRF), psyllium, in order to bind water emitted from the berries and to preserve the volume and the structure of the product upon drying, an anti-caking agent (amorphous silicon dioxide and microcrystalline cellulose), which helps to inhibit the product from sticking and wetting during the shelf-life period, and a mixture of the emulsifier and the stabilizers , to give an airy structure to the product at the higher drying temperatures. Adding the agent binding water emitted from the berries and the anti-caking agent reduces the softening of the product during the shelf life. In the product was reduced sugar content (in the most preferred embodiment the range of sugar content was left to be 14.5 to 16 percentage by weight) in order to reduce the stickiness of the surface of the product, and thereby reduce the sticking together of the chips in an open package and to extend the consumption attractiveness of the package or the shelf-life of the initial characteristics (in the most preferred embodiment, 1 h to 2 h 30 min), in the conditions of 21 °C and 55% of humidity, i.e., at room temperature. In order to compensate for the reduced amount of sugar, for improving the taste, the sweetener Stevia was added. Also, the drying temperature was raised to 100 °C, in order to ensure more rapid drying of the product.

The dried airy chips are alternative treats to the desserts containing plenty of sugar, as they contain a sweetener, and are therefore low-calorie snacks. The chips contain vitamin C, which is essential from the point of view of a healthy nutrition, as well as vitamins B1, B2, B5 and B6. The berries used are high in potassium and at the same time very low in sodium, the berries also contain phytochemicals, and plant pigments, a lot of fiber and pectin. Instead of frozen berries can also be used frozen fruit or a mixture thereof. Thus, the dried airy chips presented in the invention are a great snack for everyone who cares about their health.

## Claims

1. Dried airy chip manufactured from pureed frozen berries and/or fruits, sugar, a mixture of the emulsifier and the stabilizers, an acidity regulator **characterized in that** the chip comprises up to 19 percentage by weight of sugar, a sweetener, an agent binding water emitted from the berries or fruits and an anti-caking agent and that for the manufacture of the chip has been used a shortened drying time of 10 minutes up to 1 hour 20 minutes, and that the chip has retained its initial physical characteristics at 21 °C and 55% humidity conditions for up to two and a half hours.

2. Dried chip according to claim 1, **characterized in that** the composition of a chip in the percentage by weight comprises:
pureed frozen berries/fruits from 51.4 to 89;
sugar from 10.8 to 19;
a sweetening agent from 0.015 to 0.06;
an anti-caking agent from 0.5 to 3;
a mixture of an emulsifier and stabilizers from 1 to 3;
an agent binding water emitted from the berries from 2 to 5.8.

3. Dried chip according to claims 1 and 2, **characterized in that** the acidity regulator is a citric acid which optionally comprises in the composition of the chip from 0.2 to 1 percentage by weight.

4. Dried chip according to claims 1 to 3, **characterized in that** the sugar content is from 14.5 to 16 percentage by weight.

5. Dried chip according to claims 1 to 4, **characterized in that** the anti-caking agent is amorphous silica.

6. Dried chip according to claims 1 to 5, **characterized in that** the anti-caking agent is microcrystalline cellulose.

7. Dried chip according to claims 1 to 6, **characterized in that** the sweetener is Stevia.

8. Dried chip according to claims 1 to 7, **characterized in that** the a mixture of an emulsifier and stabilizers is a product Palsgaard® Mouldlce 169 (P5969).

9. Dried chip according to claims 1 to 8, **characterized in that** the agent binding water emitted from the berries is dehydrated rice flakes (DRF).

10. Dried chip according to claims 1 to 8, **characterized in that** the agent binding water emitted from the berries is psyllium.

11. Dried chip according to claims 1 to 10, **characterized in that** the pureed part size does not exceed 1 mm.
